# EUROPÄISCHE PATENTSCHRIFT

(11) **EP 1 199 262 B1**
(45) Veröffentlichungstag und Bekanntmachung des Hinweises auf die Patenterteilung: **31.03.2004**
(21) Anmeldenummer: 01250362.9
(22) Anmeldetag: 15.10.2001
(51) Int. Cl.: B65G 39/071, F16H 55/36, B65G 23/08

(54) **Gurtförderer für Stückgut mit mehrfach balligen Rollen**
Belt conveyor for piece goods having multiply crowned pulleys
Transporteur à courroie d'articles individuels avec des poulies à bombé multiple

(30) Priorität: 18.10.2000 DE 20018272 U
(43) Veröffentlichungstag der Anmeldung: 24.04.2002
(73) Patentinhaber: Siemens AG, 80333 München (DE)
(72) Erfinder: Bonifer, Edgar, 64839 Münster (DE); Jahns, Werner, Dipl-Ing., 63500 Seligenstadt (DE); Kratz, Helmut, 63100 Rodgau (DE)

(56) Entgegenhaltungen:
- WO-A-94/04850
- DE-A- 19 801 823
- FR-A- 855 998
- US-A- 3 122 935
- US-A- 3 713 348
- US-A- 5 213 202

## Beschreibung

Die Erfindung betrifft einen Fördergurtförderer für Stückgut, insbesondere für biegeschlaffes Stückgut wie Zeitungen, Textilien oder Säcke, mit einer Mehrzahl parallel zueinander und voneinander beabstandeter, quer zur Förderrichtung drehbar gelagerter Tragrollen oder mit Gleitflächen für einen die Förderfläche für das Stückgut bildenden Fördergurt, der um an beiden Enden des Gurtförderers vorgesehene Umlenkrollen endlos geführt ist, von denen eine der Umlenkrollen angetrieben ist und die Fördergurtführung übemimmt.

Aus der internationalen Offenlegungsschrift WO94/04850 ist eine Rollenförderbahn für biegeschlaffes Stückgut, wie z. B. Handtücher, bekannt. Die Rollenförderbahn besteht im wesentlichen aus einer Vielzahl von in Förderrichtung hintereinander sowie parallel zueinander angeordneten Rollen, die eine weitestgehend horizontale Transportfläche für das Stückgut bilden. Um zu vermeiden, dass das biegeschlaffe Stückgut zwischen die mit Abstand aufeinanderfolgenden Rollen gezogen wird oder hindurchfällt, werden um jeweils eine Gruppe von aufeinanderfolgenden Rollen mehrere schmale endlos umlaufende Fördergurtstreifen geführt. Hierbei sind die Fördergurte in Förderrichtung gesehen nebeneinander angeordnet. Die Freiräume zwischen den Rollen werden hierdurch netzartig verschlossen.

Aus der deutschen Patentanmeldung DE 198 01 823 ist eine ähnliche Lösung bekannt. Dort wird durch eine spezielle Ausbildung der Rollen mit konvexförmig ausgebildeten Abschnitten der Rollen, die sich mit zylinderförmigen Abschnitten abwechseln, in Abstimmung mit der Dicke des Fördergurtes erreicht, dass bei Ablenkung eines Fördergurtes durch Stückgut von der höchsten Stelle des sich verjüngenden Abschnittes in Richtung des zylinderförmigen Abschnittes dieser Fördergurt den Kontakt zu dem Stückgut verliert und somit vor Erreichen des benachbarten sich verjüngenden Abschnittes sich in einer noch auf dem sich verjüngenden Abschnitt aufliegenden Position stabilisieren kann. Nach Weitertransport des Stückgutes kann der Fördergurt selbsttätig wieder zu der höchsten Stelle des erweiterten Abschnittes wandern. Durch Selbstzentrierung der schmalen Fördergurte wird die Rollenförderbahn störunanfällig gegen von außen auf die Fördergurte und quer zur Förderrichtung wirkende Kräfte.

Der Nachteil dieser Förderer besteht darin, dass sie nicht für jegliches Stückgut geeignet sind, weil kleine oder herabhängende Teile zwischen Riemen und Tragrollen geraten und zu Störungen der Anlage führen können. Deshalb verwendet man für kritische biegeschlaffe Stückgüter häufig Gurtförderer mit breiten und relativ kurzen Fördergurten, die sich aber in der Regel nur sehr schwer in ihrer Gradlaufeigenschaft beeinflussen lassen. Häufig werden zusätzliche Regeleinrichtungen benötigt.

Aus der US-A-3122935 ist eine Umlenkrolle für einen Gurtförderer bekannt geworden, die aus einzelnen gegeneinander gerichteten konischen Elementen zusammengesetzt wird. Die jeweils größten Durchmesser dieser konischen Elemente sind an den Außenseiten und in der Mitte der Umlenkrolle angeordnet, so dass nicht nur ein starker Verschleiß des Fördergurtes an den spitzen Übergängen zu erwarten ist, sondern auch Nachteile durch den sich erhöhenden Randbereich des Fördergurtes.

Der vorliegenden Erfindung liegt die Aufgabe zugrunde, einen Förderer für Stückgut, insbesondere für biegeschlaffes Stückgut wie Zeitungen, Textilien oder Säcke, zu schaffen, der eine verminderte Störanfälligkeit aufweist und der mit einfachen Antriebsmittein eine gute Geradlaufeigenschaften des um Umlenkrollen geführten Fördergurtes aufweist.

Zur Lösung der Aufgabe werden die im Patentanspruch 1 beschriebenen Merkmale vorgeschlagen.

Es hat sich gezeigt, das eine derart ausgebildete Umlenkrolle vor allem dünnere und flexible Fördergurte hervorragend gut führt, selbst wenn einseitige und quer wirkende Kräfte aus den transportierten Lasten wirken. Dabei ist eine Flexibilität des Fördergurtes insbesondere in Querrichtung von Vorteil, weil beim Umlaufen des vorgespannten Fördergurtes eine Einschnürung zwischen den balligen Abschnitten stattfindet, die infolge der quer zur Förderrichtung wirksamen Kräfte zu einem Zentrieren des Fördergurtes führen.

Eine besonders günstige und einfache Gestaltung der angetriebenen Umlenkrolle ergibt sich, wenn die Umlenkrolle rohrförmig ausgebildet ist und in ihrem Inneren den Stator eines die Umlenkrolle antreibenden Elektromotors aufnimmt. Die so gestaltete und erfindungsgemäß konturierte Umlenkrolle wird dadurch vereinfacht, weil durch den verwendeten Trommel- bzw. Hohlwellenmotor zusätzliche Getriebe und extemen Antriebe entfallen.

Eine besonders einfache und wirtschaftliche Lösung ergibt sich, wenn die erfindungsgemäß vorgesehenen balligen Abschnitte unmittelbar in die Oberfläche des Rohrmantels der angetriebenen Umlenkrolle eingeformt, vorzugsweise in die Oberfläche des Rohrmantels eingeschliffen sind.

Die Breite des Fördergurtes entspricht im Wesentlichen der Länge der Umlenkrolle und überdeckt alle balligen Abschnitte der Umlenkrolle. Diese Maßnahme garantiert die Zentrierung des Fördergurtes, weil jeder ballige Abschnitte dazu beiträgt, den Fördergurt zu führen, auch wenn bei einseitiger Last die dabei entstehenden Querkräfte den Fördergurt seitlich zu verschieben trachten.

Gute Laufeigenschaften ergeben sich, wenn die balligen Abschnitte der Umlenkrolle konvex geformt sind und die Bereiche zwischen zwei benachbarten baitigen Abschnitte zylindrisch ausgestaltet sind. Es ist aber auch im Rahmen der Erfindung möglich, die Umlenkrolle mit einer sich über die Länge der Umlenkrolte erstreckenden Wellenkontur zu versehen, wobei die balligen Abschnitte Teile dieser Wellenkontur sind.

Der Fördergurt weist erfindungsgemäß einen flachen rechteckigen Querschnitt auf, das Material hoher Festigkeit ist vor allem in Querrichtung relativ flexibel und insgesamt möglichst dünn. Auf einem erfindungsgemäßen Förderer lassen sich biegeschlaffe Gegenstände, wie Textilien, Zeitschriften, beschädigte Kartonagen, weiche Verpackungen und fehlerhafte Umschnürungen sowie alle nicht rollbahnfähigen Güter transportieren. Der Antrieb ist funktionell einfach und preisgünstig, der Förderer ist nicht störanfällig.

Die Erfindung wird nachfolgend anhand eines in Zeichnungen dargestellten Ausführungsbeispiels näher beschrieben. Es zeigen:
- Figur 1: einen Längsschnitt durch den erfindungsgemäßen Förderers
- Figur 2: einen Querschnitt durch den erfindungsgemäßen Förderer mit Blick auf die erfindungsgemäße Umlenkrolle.

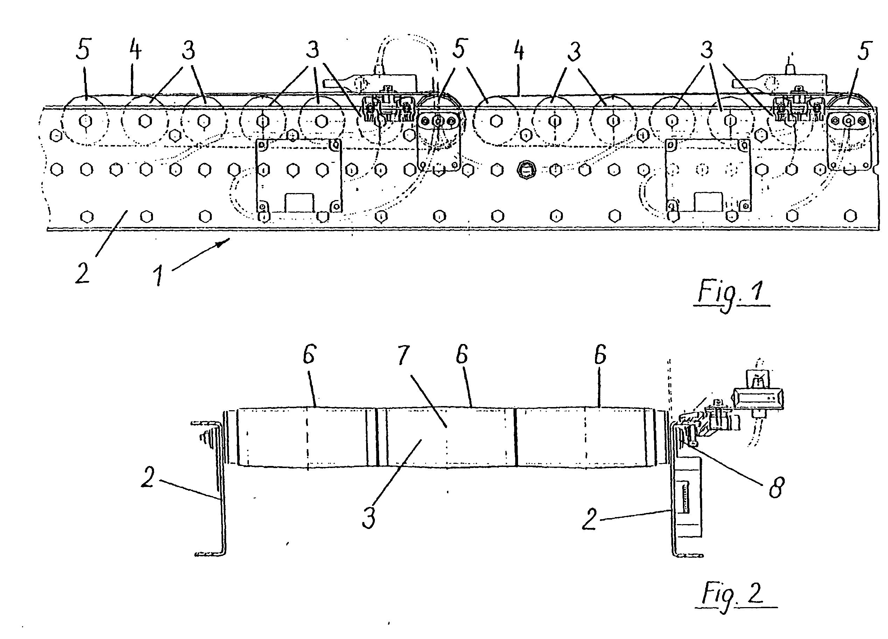

Figur 1 zeigt einen Längsschnitt durch einen Förderer 1 für biegeschlaffes Stückgut wie Zeitungen, Textilien oder Säcke, der im wesentlichen aus zwei in Förderrichtung F verlaufenden, als aufrechtstehende und u-förmige Blechteile ausgebildeten Seitenrahmen 2 und zwischen den Seitenrahmen 2 gelagerten Rollen 3 besteht. Die Rollen 3 sind jeweils parallel zueinander, in Förderrichtung F gesehen mit Abstand hintereinander sowie quer zur Förderrichtung F ausgerichtet und bilden eine horizontale Förderfläche für das Stückgut. Um zu vermeiden, dass das biegeschlaffe Stückgut zwischen die Rollen 3 gerät, sind um eine Gruppe von beispielsweise sechs aufeinanderfolgenden Rollen 3 endlos umlaufende Fördergurte 4 geführt, die jeweils in Förderrichtung F verlaufen und etwa der Breite der Rollen 3 entsprechen.

Zur Führung und zum Antrieb der Fördergurte 4 ist erfindungsgemäß jeweils eine äußere, als Umlenkrolle 5 ausgebildete Rolle einer Gruppe aufeinanderfolgender Rollen 3 als Antriebsrolle konzipiert. Die Umlenkrolle 5 ist rohrförmig ausgebildet und nimmt in ihrem Inneren den Stator eines die Umlenkrolle 5 antreibenden Elektromotors auf. Außerdem weist die Außenmantelfläche der angetriebenen Umlenkrolle mehrere ballige Abschnitte 6 auf, die sich symmetrisch beidseitig zur Längsmittelachse 7 des Fördergurtes 4 in Längsrichtung der Umlenkrolle 5 erstrecken und die den in Förderrichtung F umlaufenden Fördergurt 4 führen.

Die Figur 2 zeigt einen Querschnitt durch den Förderer 1 mit Blick auf eine der erfindungsgemäßen Umlenkrollen 5, die jeweils beidseitig in den aufrechtstehenden, u-förmigen Blechteilen des Seitenrahmens 2 gelagert sind. Die Umlenkrollen sind praktisch die Wellen oder Trommeln eines sogenannten Wellen- oder Trommelmotors, dessen Stator 8 im Inneren des rohrförmigen Umlenkrollenmantels angeordnet ist, so dass ein einfacher Antrieb entsteht, der funktionell ist und konstruktiv klein baut. Erkennbar sind auf der Mantelfläche der Umlenkrolle 5 drei gleich große ballige Abschnitte 6 aufgebracht, über die der Fördergurt geführt ist. Der Fördergurt besteht aus einem äußerst flexiblen und hoch dehnbarem Material, das sich der balligen Mantelfläche der Umlenkrollen 5 gut anpasst. Es hat sich gezeigt, das eine derart ausgebildete Umlenkrolle 5 hervorragende Eigenschaften zur Geradeausführung des Fördergurtes 4 aufweist. Selbst bei bewusstem seitlichen Verschieben des Fördergurtes 4 quer zur Laufrichtung über den ersten balligen Abschnitt hinweg stabilisiert sich der Fördergurtes 4 nach wenigen Umdrehungen in seiner Ausgangslage . Die balligen Abschnitte 6 sind unmittelbar auf den Außenmantel der rohrförmigen Umlenkrolle 5 durch Schleifen aufgebracht, zusätzliche aufgesetzte Bauteile entfallen dadurch.

## Patentansprüche

1. Gurtförderer für Stückgut mit einer Mehrzahl parallel zueinander und voneinander beabstandeter, quer zur Förderrichtung (F) drehbar gelagerter Tragrollen (3) oder mit Gleitflächen für einen die Förderfläche für das Stückgut bildenden Fördergurt (4), der um an beiden Enden des Gurtförderers (1) vorgesehene Umlenkrollen (5) endlos geführt ist, von denen die Außenmantelfläche einer der Umlenkrollen (5) mehrere erhöhte Abschnitte (6) aufweist, die sich symmetrisch beidseitig zur Längsmittelachse (7) des Fördergurtes (4) in Längsrichtung der Umlenkrolle (5) erstrecken und die den in Förderrichtung (F) umlaufenden Fördergurt (4) führen,
**dadurch gekennzeichnet, dass** die die erhöhten Abschnitte ballig ausgebildet sind, dass die die balligen Abschnitte aufweisende Umlenkrolle (5) angetrieben ist und dass der Fördergurt (4), dessen Breite im Wesentlichen der Länge der angetrieben Umlenkrolle (5) entspricht, alle balligen Abschnitte (6) der Umlenkrolle (5) überdeckt.

2. Gurtförderer für Stückgut nach Anspruch1,
**dadurch gekennzeichnet,**
**dass** die angetriebene Umlenkrolle (5) rohrförmig ausgebildet ist und in ihrem Inneren den Stator (8) eines die Umlenkrolle (5) antreibenden Elektromotors aufnimmt.

3. Gurtförderer für Stückgut nach Anspruch 1 und 2,
**dadurch gekennzeichnet,**
**dass** die balligen Abschnitte (6) unmittelbar in die Oberfläche des Rohrmantels der Umlenkrolle (5) eingeformt sind.

4. Gurtförderer für Stückgut nach einem der Ansprüche 1 bis 3,
**dadurch gekennzeichnet,**
**dass** die balligen Abschnitte (6) in die Oberfläche des Rohrmantels der angetriebenen Umlenkrolle (5) eingeschliffen sind.

5. Gurtförderer für Stückgut nach einem der Ansprüche 1 bis 4,
**dadurch gekennzeichnet,**
**dass** die balligen Abschnitte (6) der Umlenkrolle (5) konvex geformt sind und die Bereiche zwischen zwei benachbarten balligen Abschnitten (6) zylindrisch ausgestaltet sind.

6. Gurtförderer für Stückgut nach einem der Ansprüche 1 bis 5,
**dadurch gekennzeichnet,**
**dass** die balligen Abschnitte (6) der Umlenkrolle (4)Teile einer sich über die Länge der Umlenkrolle (5) erstreckenden Wellenkontur sind.

7. Gurtförderer für Stückgut nach einem der Ansprüche 1 bis 6 ,
**dadurch gekennzeichnet,**
**dass** der Fördergurt (4) einen flachen und rechteckigen Querschnitt aufweist.

## Claims

1. Belt conveyor for articles, having a plurality of parallel, spaced-apart carrying rollers (3), which are mounted such that they can be rotated transversely to the conveying direction (F), or having sliding surfaces for a conveying belt (4) which forms the conveying surface for the articles and is guided endlessly around deflecting rollers (5) which are provided at the two ends of the belt conveyor (1), the outer lateral surface of one of the deflecting rollers (5) having a plurality of raised sections (6) which extend symmetrically, on both sides of the longitudinal centre axis (7) of the conveying belt (4), in the longitudinal direction of the deflecting roller (5) and which guide the conveying belt (4) as it circulates in the conveying direction (F), **characterized in that** the raised sections are of crowned design, **in that** the deflecting roller (5) having the crowned sections is driven, and **in that** the conveying belt (4), of which the width corresponds essentially to the length of the driven deflecting roller (5), covers over all the crowned sections (6) of the deflecting roller (5).

2. Belt conveyor for articles according to Claim 1, **characterized in that** the driven deflecting roller (5) is of tubular design and, in its interior, accommodates the stator (8) of an electric motor which drives the deflecting roller (5).

3. Belt conveyor for articles according to Claims 1 and 2, **characterized in that** the crowned sections (6) are formed directly in the surface of the tubular casing of the deflecting roller (5).

4. Belt conveyor for articles according to one of Claims 1 to 3, **characterized in that** the crowned sections (6) are ground into the surface of the tubular casing of the driven deflecting roller (5).

5. Belt conveyor for articles according to one of Claims 1 to 4, **characterized in that** the crowned sections (6) of the deflecting roller (5) are shaped convexly and the regions between two adjacent crowned sections (6) are of cylindrical configuration.

6. Belt conveyor for articles according to one of Claims 1 to 5, **characterized in that** the crowned sections (6) of the deflecting roller (4) are parts of an undulating contour which extends over the length of the deflecting roller (5).

7. Belt conveyor for articles according to one of Claims 1 to 6, **characterized in that** the conveying belt (6) has a flat and rectangular cross section.

## Revendications

1. Transporteur à courroie pour colis de détail comprenant une pluralité de rouleaux porteurs (3), montés à rotation parallèlement les uns aux autres, à distance les uns des autres et transversalement au sens de transport (F), ou bien présentant des surfaces de glissement destinées à une courroie de transport (4) qui constitue la surface de transport pour les colis de détail et qui est guidée sans fin autour des rouleaux de renvoi (5) prévus aux deux extrémités du transporteur à courroie (1), la surface d'enveloppe extérieure de l'un des rouleaux de renvoi (5) comportant plusieurs sections renflées (6) qui s'étendent symétriquement des deux côtés de l'axe médian longitudinal (7) de la courroie de transport (4) dans la direction longitudinale du rouleau de renvoi (5) et qui guident la courroie de transport (4) circulant dans la direction de transport, **caractérisé en ce que** les sections renflées ont une forme bombée, **en ce que** les rouleaux de renvoi (5) comportant les sections bombées sont entraînés et **en ce que** la courroie de transport (4), dont la largeur correspond sensiblement à la longueur du rouleau de renvoi entraîné (5), couvre toutes les sections bombées (6) du rouleau de renvoi (5).

2. Transporteur à courroie pour colis de détail selon la revendication 1, **caractérisé en ce que** le rouleau de renvoi entraîné (5) a une forme tubulaire et reçoit à l'intérieur le stator (8) d'un moteur électrique entraînant le rouleau de renvoi (5).

3. Transporteur à courroie pour colis de détail selon les revendications 1 et 2, **caractérisé en ce que** les sections bombées (6) sont conformées directement dans la surface de l'enveloppe tubulaire du rouleau de renvoi (5).

4. Transporteur à courroie pour colis de détail selon les revendications 1 à 3, **caractérisé en ce que** les sections bombées (6) sont réalisées par rodage dans la surface de l'enveloppe tubulaire du rouleau de renvoi entraîné (5).

5. Transporteur à courroie pour colis de détail selon les revendications 1 à 4, **caractérisé en ce que** les sections bombées (6) du rouleau de renvoi (5) ont une forme convexe et les régions entre deux sections bombées convexes (6) ont une forme cylindrique.

6. Transporteur à courroie pour colis de détail selon les revendications 1 à 5, **caractérisé en ce que** les sections bombées (6) du rouleau de renvoi (5) font partie d'un contour ondulé s'étendant sur la longueur du rouleau de renvoi (5).

7. Transporteur à courroie pour colis de détail selon l'une des revendications 1 à 6, **caractérisé en ce que** la courroie de transport (4) a une section plate et rectangulaire.
